# EUROPEAN PATENT APPLICATION

(11) **EP 2 690 214 A1**
(43) Date of publication of application: **29.01.2014**
(21) Application number: 12178149.6
(22) Date of filing: 27.07.2012
(51) Int. Cl.: D06F 58/20, A47L 15/42

(54) **Appliance for treating articles**

(71) Applicant: Electrolux Home Products Corporation N.V., 1130 Brussel (BE)
(72) Inventor: Cavarretta, Francesco, I-33080 Porcia (PN) (IT); Zattin, Andrea, I-33080 Porcia (PN) (IT)
(74) Representative: Maccalli, Marco

(57) **Abstract**

Articles treatment appliance (1), in particular for treating laundry or tableware, having a heat pump system (5), the heat pump system having a refrigerant loop, the appliance comprising: an articles treatment chamber (2) for treating articles using a medium; a first heat exchanger (6) for heating a refrigerant; a second heat exchanger (7) for cooling the refrigerant and heating the medium; a refrigerant expansion device (14) arranged in the refrigerant loop between the second heat exchanger (7) and the first heat exchanger (6); a compressor (8) arranged in the refrigerant loop between the first heat exchanger (6) and the second heat exchanger (7). The refrigerant is a blend of alkanes type molecules with general formula CₙH₂ₙ₊₂ with 1 ≤ n ≤ 8.

## Description

### Background of the invention

### Field of the invention

The present invention relates to appliances for treating articles, and is in particular directed to appliances for treating laundry or tableware, like laundry washers, laundry washers/dryers, dishwashers.

### Overview of the related art

Appliances for drying laundry, like laundry dryers (tumble dryers) and laundry washers/dryers, generally comprise a drying chamber for accommodating therein the laundry to be dried. A heated and dehumidified drying medium, typically air, is guided through the drying chamber. Upon passing through the drying chamber and laundry, the heated and dehumidified drying medium takes up humidity and at the same time cools down. The drying medium then exits the drying chamber, thereby discharging humidity from the drying chamber and the laundry.

In order to improve the energy efficiency of such appliances, it is known to use heat pumps. In this way, residual heat from the drying medium exiting the drying chamber can be extracted therefrom and transferred again to the drying medium before it re-enters the drying chamber.

Heat pumps generally operate with refrigerants as working fluids.

Traditional refrigerants, such as HydroChloroFluoroCarbons (HCFC) and HydroFluoroCarbons (HFC), like R134a and R407c, are known to cause damages to the environment, inter alia by their ozone-destroying properties and most of all by their high Global Warning Potential (GWP), which is the measure of how much a given mass of greenhouse gas is estimated to contribute to global warming. Apart from this, many conventional refrigerants can be toxic.

In general, and in particular with household appliances, it is desirable to use refrigerants being far less harmful and toxic and having a reduced impact on the environment in terms of both ozone-destroying properties and GWP.

### Summary of the invention

The Applicant believes that there is the need of providing appliances for treating articles, in particular appliances for treating laundry or tableware, having an advantageous energy efficiency combined with an at least reduced environmental hazard potential.

Starting from this observation, the Applicant has observed that at present there are alternatives for HFC's with low GWP.

The Applicant observed that a possible refrigerant fluid is CO₂; this fluid is neither flammable nor toxic, but its operative pressures are very high, thus leading to complex design for a correct operation of the equipment.

Another possible alternative can consists in the use of Hydro-Fluoro-Olefines (HFO). These are synthetic fluids characterized by a very low GWP. However, the Applicant has found that the use of HFO as a working fluid in a heat pump for a dryer has drawbacks.

The Applicant has found that an energy-efficient refrigerant with low environmental impact and that can be expediently used, being particularly efficient due to its thermodynamical properties, in heat-pump article treatment appliances, particularly appliances for treating laundry or tableware, is a fluid which is a blend composed by a mix of simple hydrocarbon alkane compounds which are identified by the general formula CₙH₂ₙ₊₂ with 1 ≤ n ≤ 8.

Preferably, the mixture of hydrocarbon alkane compounds may include compounds identified by the general formula CₙH₂ₙ₊₂ with 2 ≤ n ≤ 4.

Advantageously, the refrigerant can be R441a, which is a blend composed by a mix of Ethane (C₂H₆), Propane (C₃H₈), Buthane (C₄H₁₀) and Isobuthane (2-metil Propane) (C₄H₁₀).

Preferably, the weight ratio composition of the hydrocarbons in the mixture is in the range of: from 2 to 4 of Ethane; from 40 to 70 of Propane; from 25 to 45 of Butane; from 4 to 8 of Isobutane. A particularly preferable weight ratio is 3.1 : 54.8 : 36.1 : 6.0 of Ethane : Propane : Butane : Isobutane, respectively.

The Applicant has found that R441a is advantageous under several respects. R441a is composed by natural fluids, so it is more eco-friendly than both HFC and HFO. Compared to the compounds like HFC and HFO, R441 a does not contain Halogen atoms such as Cl (Chlorine) and F (Fluorine), but only contains C (carbon) and H (hydrogen).

In particular, HFO molecules are characterized by an unsaturation (olefin-based molecules). The unsaturation (double C bonds) could be easily degraded by oxidants present in the system. Temperature, pressure and metals could catalyse the reaction. The secondary product of this reaction could be acidic molecules that provide some corrosion phenomena in the system. The degradation of R441a instead does not provide this kind of unwanted corrosive effect.

Furthermore, the GWP of R441 a is close to zero.

Another advantageous characteristic of R441 a is that it is a zeotropic blend. Pure fluids or azeotropic blends, are characterized by the fact that the temperature stays at a constant level during the isobaric change of phases (evaporation and condensation). Zeotropic blends are instead characterized by the fact that the temperature does not remain constant during the isobaric change of phases (it increases during the evaporation phase and it decreases during the condensation phase). The temperature at which the evaporation and condensation occur depends on the refrigerant pressure and it is called "saturation temperature". In case of azeotropic fluids, the temperature of the saturated liquid (that is called "bubble point temperature" or "bubble temperature") and the temperature of the saturated vapour (that is called "dew point temperature" or "dew temperature") are the same. In case of zeotropic blends, the bubble temperature is lower than the dew temperature. The difference between these two values (dew temperature minus bubble temperature) is called "glide". In a heat pump, the presence of a certain level of glide allows a better matching between the air and the refrigerant temperature profiles at the evaporator and at the condenser. The temperature difference between the air and the refrigerant decreases in case of zeotropic refrigerant, then the efficiency of the heat pump system increases.

The zeotropic nature and the relatively large glide of R441 a distinguishes this fluid from HFC fluids (R134a does not have glide, while R407c, even being a zeotropic blend, has a very low glide level compared to R441a).

According to an aspect of the present invention, there is provided an articles treatment appliance, in particular for treating laundry or tableware, having a heat pump system, the heat pump system having a refrigerant loop.

The appliance comprises:
an articles treatment chamber for treating articles using a treatment medium (shortly, medium);
a first heat exchanger for heating a refrigerant;
a second heat exchanger for cooling the refrigerant and heating the medium;
a refrigerant expansion device arranged in the refrigerant loop between the second heat exchanger and the first heat exchanger, and
a compressor arranged in the refrigerant loop between the first heat exchanger and the second heat exchanger.

The refrigerant is a blend of alkanes type molecules with general formula CₙH₂ₙ₊₂ with 1 ≤ n ≤ 8.

Preferably, the refrigerant is a blend of alkanes type molecules with general formula CₙH₂ₙ₊₂ with 2 ≤ n ≤ 4.

Advantageously, the refrigerant is R441a.

The weight ratio composition of the hydrocarbons in the mixture is preferably in the range of: from 2 to 4 of Ethane; from 40 to 70 of Propane; from 25 to 45 of Butane; from 4 to 8 of Isobutane. More preferably the weight ratio composition is 3.1 : 54.8 : 36.1 : 6.0 of Ethane : Propane : Butane : Isobutane, respectively.

A critical temperature of the refrigerant is preferably in a range from about 105 °C to about 130 °C, preferably 117.3 °C.

A critical pressure of the refrigerant is preferably in a range from about 39 bar 25 to about 49 bar, preferably 44.04 bar.

The nominal heat of vaporization of the refrigerant is preferably in a range from about 430 kJ/kg to about 470 kJ/kg, preferably 451.5 kJ/kg.

The global warming potential index of the refrigerant is preferably in a range from 1 to 10, preferably less than 5.

The refrigerant preferably has a nominal glide in a range from about 18 °C to about 22 °C, preferably about 20 °C at an absolute pressure of 1 bar.

The refrigerant preferably has a glide of about 16 °C to 20 °C, preferably 18.2 °C at a pressure of 5 bar.

The refrigerant preferably has a glide of about 14.4 °C at a pressure of 15 bar.

In embodiments of the present invention, the first heat exchanger is adapted for cooling the medium.

In embodiments of the present invention, a nominal first heat exchanger inlet temperature of the medium is about 30° C at the least.

The second heat exchanger may comprise a liquefier heat exchanger, and a nominal liquefier heat exchanger outlet temperature of the medium is 100 °C at the most.

The appliance may comprise a closed-loop circuit wherein the medium circulates.

Preferably, the heat pump system has a nominal cooling power between about 500 W and 3,500 W, in particular between 1,500 W and 3,500 W.

### Brief description of the drawings

These and other features and advantages of the present invention will be made clearer by reading the following detailed description of exemplary and non-limitative embodiments thereof, referring to the following drawing figures, wherein:
**Figure 1** schematically shows a heat pump laundry dryer according to an embodiment of the present invention;
**Figures 2****,** **3** and **4** are temperature-entropy diagrams of different refrigerants and of a refrigerant according to an embodiment of the present invention;
**Figure 6** is a diagram showing the latent heat of different refrigerants and of a refrigerant according to an embodiment of the present invention;
**Figure 7** is an isometric view of the heat pump laundry dryer, with one lateral wall of an appliance cabinet removed, and

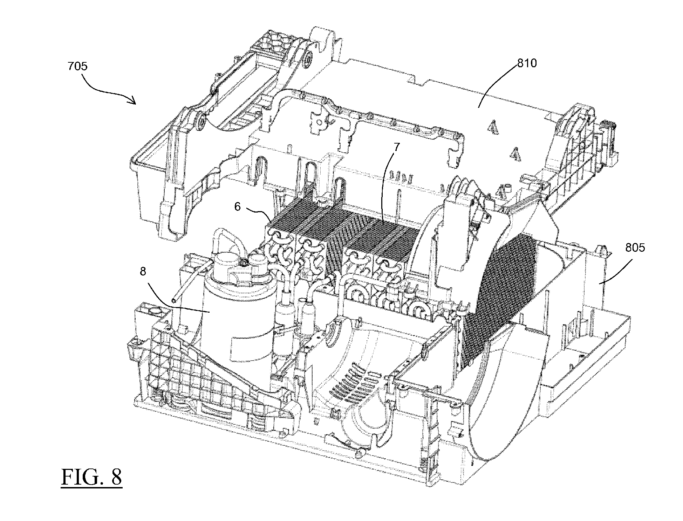

**Figure 8** shows in exploded view a basement of the laundry dryer of **Figure 7** configured for accommodating the heat pump.

### Detailed description of exemplary embodiments of the invention

Exemplary embodiments of the invention will be described in connection with the annexed figures.

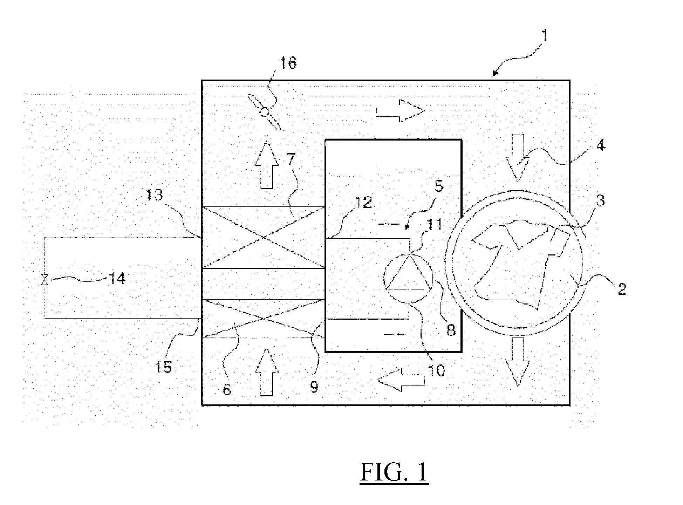

**Figure 1** schematically shows a heat pump laundry dryer **1** according to an embodiment of the present invention. It is pointed out that although in the following description a heat pump laundry dryer is considered, this choice is merely exemplary, because the present invention applies generally to any appliance for treating articles, in particular for treating laundry or tableware, like laundry washers, laundry washers/dryers, laundry dryers, dishwashers equipped with a heat pump for in heat-exchange relationship with an article treatment medium that can be a washing medium or a drying medium.

The heat pump laundry dryer **1** comprises a drying chamber **2,** preferably a rotatable drum. In operation, the drying drum **2** accommodates wet laundry **3** to be dried. For adequately drying the laundry **3,** a drying medium **4,** such as air, in particular comprising ambient air, is circulated through the drying drum **2** via a drying medium circuit, which preferably forms a closed-loop circuit.

For drying the laundry **3,** the drying medium **4** heated to a temperature of 100°C at the most and thereby having a comparatively low relative humidity is fed into the drying drum **2** and impinges the wet laundry **3.** As a consequence, humidity of the wet laundry **3** is absorbed by the drying medium **4** thereby drying the laundry **3.** As the laundry **3** in the drying drum **2** generally has a temperature below that of the drying medium **4** entering the drying drum **2,** the drying medium **4** also cools down, for example to temperatures of about 30°C.

After having passed through the drying drum **2,** the drying medium **4,** having a comparatively high relative humidity, exits the drying drum **2** and is further cooled down to condense excess humidity therefrom. After that, the drying medium **4** is recirculated through the drying drum **2.** Before re-entering the drying drum **2,** the drying medium **4** is heated up again, thereby reducing its relative humidity.

For dehumidifying and reheating the drying medium **4,** the heat pump tumble dryer **1** comprises a heat pump system or unit **5.** The heat pump unit **5** exemplarily comprises a heat exchange medium evaporator **6** and a heat exchange medium liquefier **7.** Hereinafter, the term "refrigerant" will also be used as a synonym of the term "heat exchange medium".

The heat pump unit **5** further comprises a compressor **8** interconnected between the refrigerant evaporator **6** and the refrigerant liquefier **7.** A refrigerant evaporator outlet **9** is connected to a compressor inlet **10** and a compressor outlet **11** is connected to a refrigerant liquefier inlet **12.**

A refrigerant liquefier outlet **13** is connected via a throttling element **14,** a capillary for example, to a refrigerant evaporator inlet **15.**

By the heat pump unit **5,** heat is transferred from the refrigerant evaporator **6** to the refrigerant liquefier **7.**

A refrigerant, i.e. a heat exchange medium, circulated in the heat pump unit closed circuit, is heated up at the refrigerant evaporator **6** and cooled down at the refrigerant liquefier **7.**

The relatively low temperature at the refrigerant evaporator **6** is used to cool down the drying medium **4** so as to condensate humidity, i.e. to dehumidify the drying medium **4** exiting the drying drum **2.**

The elevated temperature at the refrigerant liquefier **7** is used to reheat the drying medium **4** which in turn is then fed to the drying drum **2** for drying the laundry **3.**

The heat pump unit **5** may further comprise auxiliary heat exchangers for further optimizing energy efficiency. For example, an auxiliary refrigerant evaporator and an auxiliary refrigerant liquefier may be provided. The number of auxiliary refrigerant heat exchangers can be varied from one to nearly any arbitrary number. An auxiliary refrigerant evaporator may be used to speed up the heat-up phase of the heat pump dryer and a refrigerant liquefier may be used to balance the excess of energy of the heat pump dryer.

The direction of refrigerant flow is indicated in **Figure 1** by small arrows, whilst the flow of the drying medium **4** is indicated by larger and broader arrows. The heat pump tumble dryer **1** may comprise a fan **16** adapted to and designed for circulating the drying medium **4** within the heat pump tumble dryer circuit.

In connection with the heat pump tumble dryer **1** described so far, the Applicant has found that, both for energetic efficiency and for environmental compatibility, it is of considerable advantage to use a refrigerant, i.e. heat exchange medium, that is a blend composed by a mix of simple hydrocarbon alkane compounds, each compound having general formula CₙH₂ₙ₊₂.

The Applicant has found that a suitable mix of simple hydrocarbon alkane compounds that can advantageously be used as heat exchange medium is R441a. R441a is a blend composed by a mixture that is characterized by: Ethane (C₂H₆), Propane (C₃H₈), Buthane (C₄H₁₀) and Isobuthane (2-metil Propane) (C₄H₁₀).

The Applicant has found that a suitable weight ratio composition of the hydrocarbons in the mixture is in the range of: from 2 to 4 of Ethane; from 40 to 70 of Propane; from 25 to 45 of Butane; from 4 to 8 of Isobutane. A particularly preferable weight ratio is 3.1 : 54.8 : 36.1 : 6.0 of Ethane : Propane : Butane : Isobutane, respectively.

R441a is composed by natural fluids, so it is more eco-friendly than both HFC and HFO, which are compounds normally used as refrigerant fluids in refrigeration systems. Compared to HFC and HFO, R441a does not contain Halogen atoms such as Cl (Chlorine) and F (Fluorine), containing only C (carbon) and H (hydrogen) atoms.

HFO molecules are characterized by an unsaturation (olefin-based molecules). The unsaturation (double C bonds) could be easily degraded by oxidants present in the system. Temperature, pressure and metals could catalyse the reaction. The secondary product of this reaction could be acidic molecules that provide some corrosion phenomena in the system. Differently, the degradation of R441a does not provide this kind of unwanted corrosive effect.

Additionally, the GWP of R441a is close to zero.

Another advantageous characteristic of R441a is that it is a zeotropic blend. Pure fluids or azeotropic blends, are characterized by the fact that the temperature stays at a constant level during the isobaric change of phases (evaporation and condensation). Zeotropic blends are instead characterized by the fact that the temperature does not remain constant during the isobaric change of phases (it increases during the evaporation phase and it decreases during the condensation phase). The temperature at which the evaporation and condensation phases occur depends on the refrigerant pressure and it is called "saturation temperature". In case of azeotropic fluids, the temperature of the saturated liquid (that is called "bubble temperature") and the temperature of the saturated vapour (that is called "dew temperature") are the same. In case of zeotropic blends, the bubble temperature is lower than the dew temperature. The difference between these two values (dew temperature minus bubble temperature) is called "glide".

In a heat pump, the presence of a certain level of glide allows a better matching between the air and the refrigerant temperature profiles at the evaporator and at the condenser. The temperature difference between the air and the refrigerant decreases in case of zeotropic refrigerant, then the efficiency of the heat pump system increases.

The zeotropic nature of R441a distinguishes this fluids from HFC fluids (R134a does not have glide, while R407c, that is a zeotropic blend, has a very low glide level if compared to R441a).

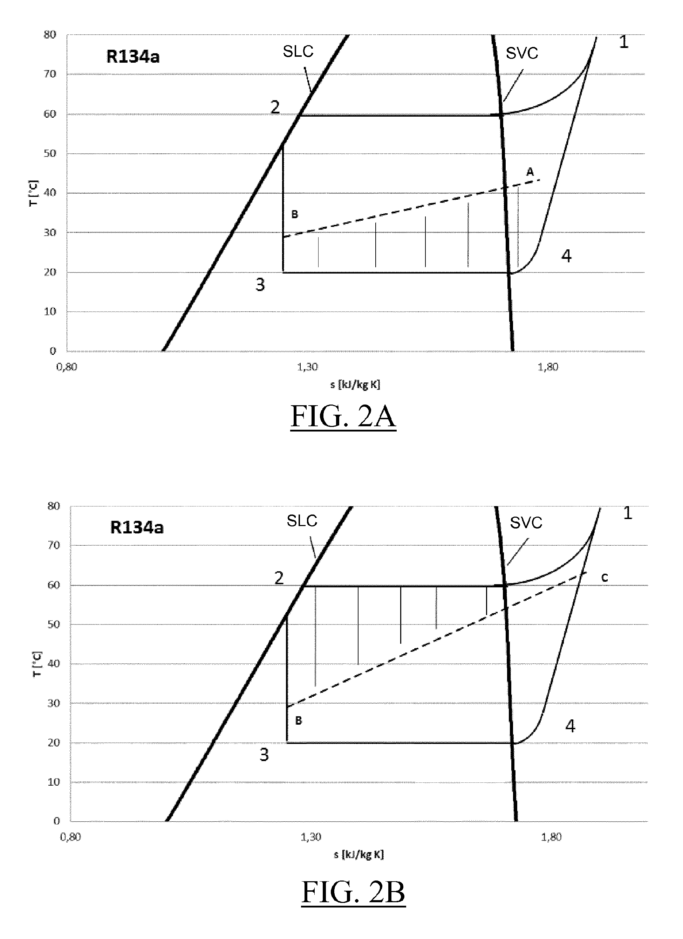

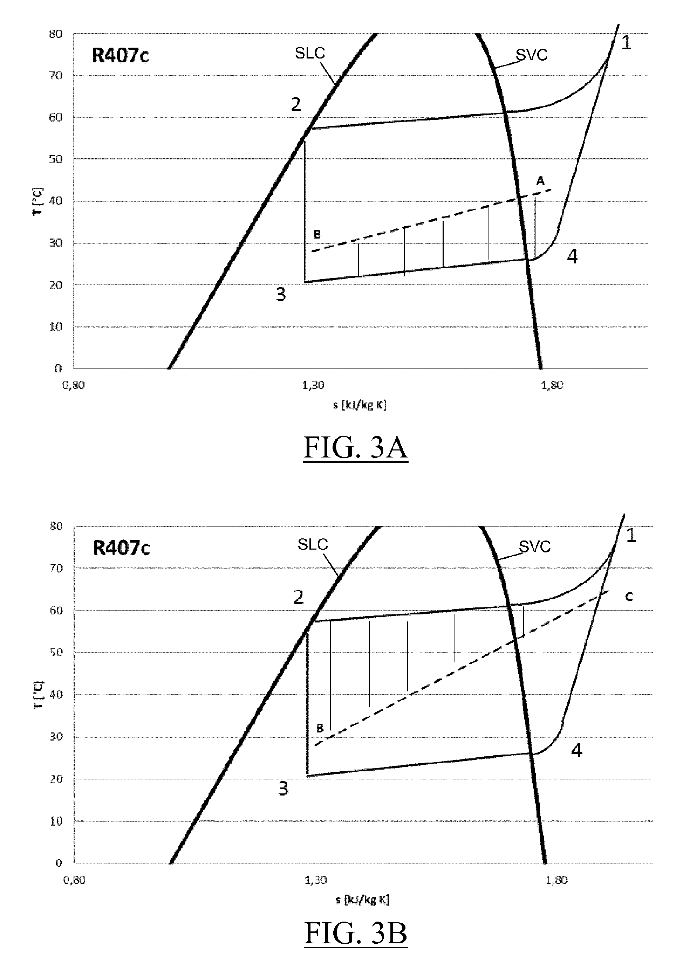

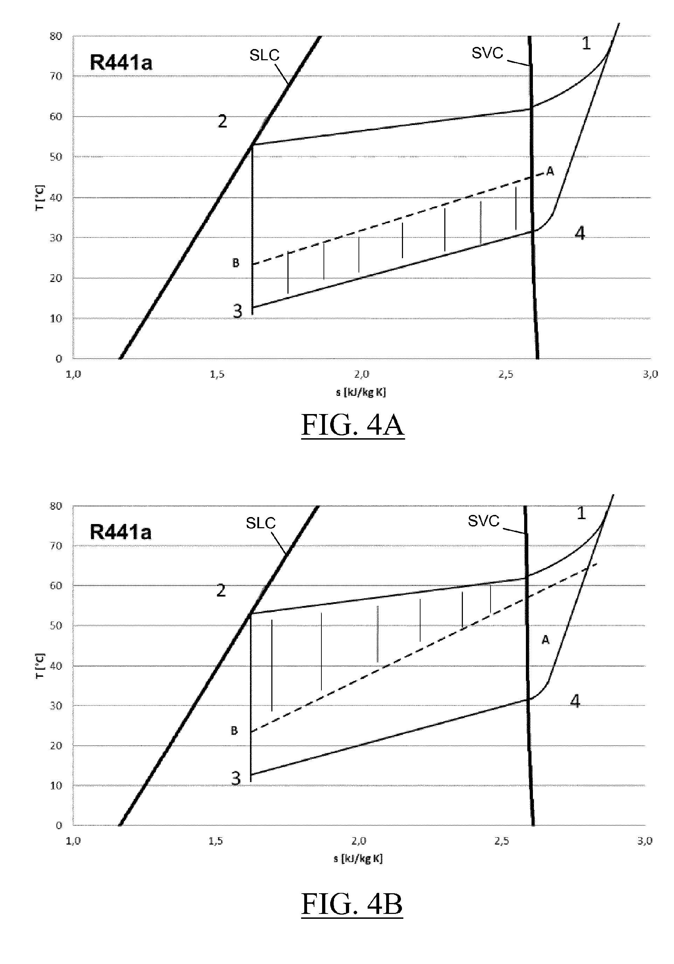

The temperature-entropy diagrams of **Figures 2****,** **3** and **4** relate to the refrigerant thermodynamic cycle in the case of R134a **(****Figures 2A** and **2B****),** 407c **(****Figures 3A** and **3B****)** and R441 a **(****Figures 4A** and **4B****);** the entropy **(s,** in [kJ/kg K]) is on the abscissa, while the temperature **(T,** in [°C]) is on the ordinate. **SLC** denotes the saturated liquid curve, **SVC** denotes the saturated vapor curve. On the same diagrams the temperature profile of the air (dashed line) is also shown (only the temperature value is relevant; the entropy values refer only to the refrigerant).

The cycle depicted in solid line (1 -> 2 -> 3 -> 4) represents the thermodynamic cycle of the refrigerant; in particular, state 1 is the state of the refrigerant at the liquefier inlet 12, state 2 is the state of the refrigerant at the liquefier outlet 13, state 3 is the state of the refrigerant at the evaporator inlet 15, and state 4 is the state of the refrigerant at the evaporator outlet 9. In respect of the drying air, A is the temperature of the drying air upon leaving the drum **2** and entering the evaporator **6,** B is the temperature of the drying air after having passed through the evaporator **6** and before passing through the liquefier **7,** and C is the temperature of the drying air after having passed through the liquefier **7** before re-entering the drum **2.**

Looking at **Figures 2A** and **2B****,** it can be appreciated that R134a has no glide: the temperature remains constant during the isobaric changes of phase (evaporation and condensation); the difference in temperature between the refrigerant and the drying air increases during the refrigerant transitions of phase.

Looking at **Figures 3A** and **3B****,** it can be appreciated that in the case R407c, having a certain (relatively low) level of glide, the temperature does not remain constant during the refrigerant transitions of phase, so that there is a better matching between the temperature of the refrigerant and that of the drying air. "Better matching" means that the temperature difference between refrigerant and drying air is lower along the heat exchanger. Therefore, the drying air can be heated up at a higher level, or the average condensation temperature can be lower in the liquefier, and the air can be cooled down at a lower level, or the average evaporation temperature can be higher in the evaporator. This leads to a higher heating and cooling capacity, or to a lower power consumption keeping the same thermal capacity (the closer the condensation and evaporation temperature levels, the higher the efficiency of the heat pump system).

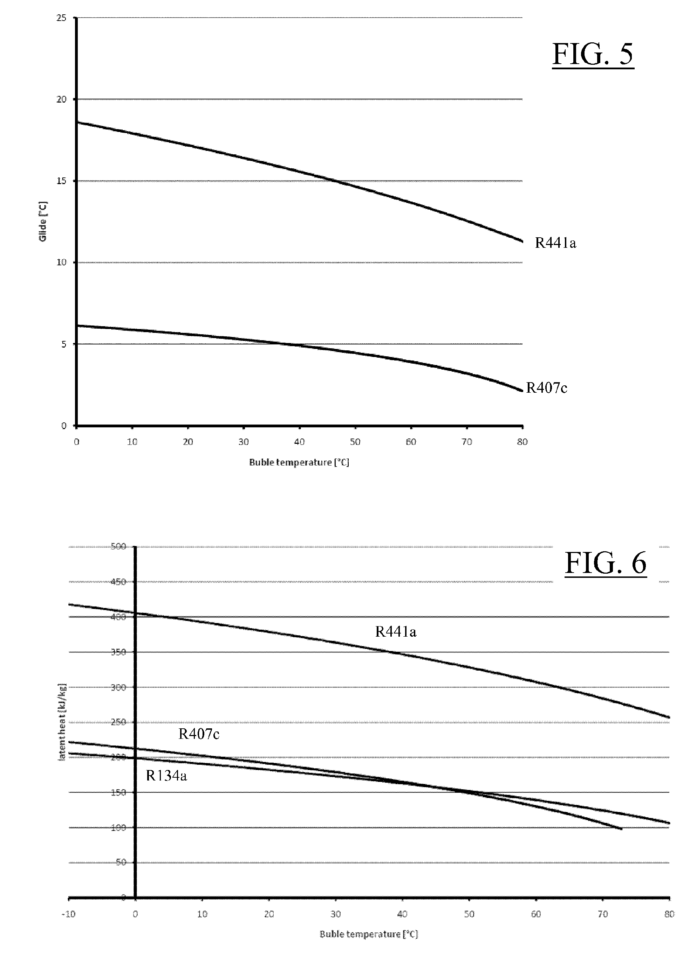

The situation improves in the case of R441 a, which has a higher level of glide compared to R407c, as shown in **Figure 5** (wherein the glide, in ordinate, [°C], is shown as a function of the bubble temperature, in abscissa, [°C]). As visible in **Figures 4A** and **4B****,** the matching between the refrigerant temperature during the change of phase and the temperature of the drying air is quite good, and the difference between these temperatures is lower than in the case of the other refrigerants.

**Figure 6** is a diagram showing the latent heat (in ordinate, [kJ/kg]) as a function of the bubble temperature (in abscissa, [°C]) of R134a, R407c and R441 a. It can be seen that R441 a has a higher latent heat, especially at high temperatures (the liquefying temperature is usually around 55-70 °C in a heat pump dryer, to allow the drying air to be warmed up at desired levels, while the evaporation temperature is around 15-30 °C). Refrigerants having a higher latent heat level are able to exchange a great amount of heat with a relative low refrigerant mass flow rate, or they are able to exchange the same heat amount with a lower refrigerant mass flow rate. This means that the compressor has to move lower refrigerant mass, with less electrical power consumption.

Other mixtures of more or less or different hydrocarbon alkane compounds are possible. More generally, a suitable mixture can include hydrocarbon alkane compounds identified by the general formula CₙH₂ₙ₊₂ with 2 ≤ n ≤ 4 (R441a falls in this class of mixtures).

Even more generally, mixtures of hydrocarbon alkane compounds identified by the general formula CₙH₂ₙ₊₂ with 1 ≤ n ≤ 8 can be used.

The Applicant has found to be of particular advantage for the heat exchange processes that the refrigerant has at least one of the following properties:
belongs to the family of the hydrocarbons
has a critical temperature of about 105 °C to 130 °C, preferably about 117.3 °C;
has a critical pressure of about 39 bar to 49 bar, preferably about 44.04 bar;
has a nominal heat of vaporization of about 430 kJ/kg to 470 kJ/kg, preferably about 451.5 kJ/kg ("nominal" means at an absolute pressure equal to 1 bar);
has a nominal glide of 18 °C to 22 °C, preferably about 20°C ("nominal" means at a absolute pressure equal to 1 bar);
has a heat of vaporization of about 357 kJ/kg to 437 kJ/kg, preferably about 397.6 kJ/kg at a pressure equal to 5 bar;
has a glide of about 16 °C to 20 °C, preferably 18.2 °C at a pressure equal to 5 bar;
has a global warming potential index of about 1 to 10 (preferably less than 5).

More preferably, the heat of vaporization is of about 322.6 kJ/kg at a pressure equal to 15 bar, and the glide of about 14.4°C at a pressure equal to 15 bar.

Preferably, the heat pump system has a nominal cooling power between about 500 W and 3,500 W, in particular between 1,500 W and 3,500 W.

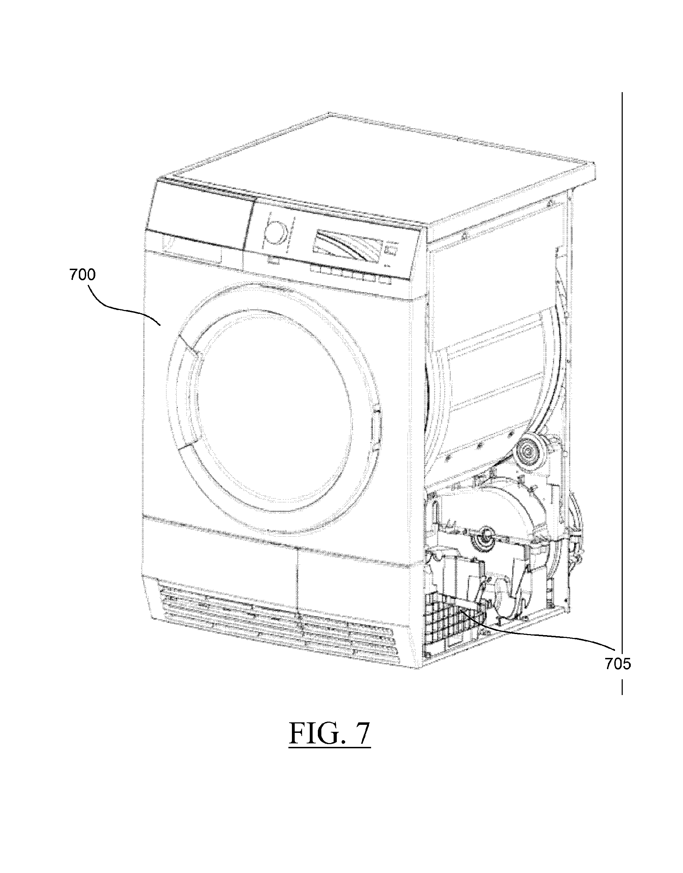

**Figure 7** is an isometric view of an exemplary laundry dryer. The laundry dryer comprises a cabinet **700,** having lateral walls (one of which has been removed in the drawing) and housing the drying drum **2** and the heat pump unit **5.**

The heat pump unit **5** is for example housed in an appliance basement **705,** which is shown per se in **Figure 7****.** The basement **705** is for example a shell composed of two half-shells **805** and **810** designed to match each other so that, when matched, they define inside them a space for accommodating the heat pump unit parts, like the evaporator **6,** the liquefier **7,** the compressor **8,** and passageways for the drying air.

## Claims

1. Articles treatment appliance **(1),** in particular for treating laundry or tableware, having a heat pump system **(5),** the heat pump system having a refrigerant loop, the appliance comprising:
an articles treatment chamber **(2)** for treating articles using a medium;
a first heat exchanger **(6)** for heating a refrigerant;
a second heat exchanger **(7)** for cooling the refrigerant and heating the medium;
a refrigerant expansion device **(14)** arranged in the refrigerant loop between the second heat exchanger **(7)** and the first heat exchanger **(6),** and
a compressor **(8)** arranged in the refrigerant loop between the first heat exchanger **(6)** and the second heat exchanger **(7),**
**characterized in that**
the refrigerant is a blend of alkanes type molecules with general formula CₙH₂ₙ₊₂. with 1 ≤ n ≤ 8.

2. The appliance of claim 1, wherein the refrigerant is a blend of alkanes type molecules with general formula CₙH₂ₙ₊₂. with 2 ≤ n ≤ 4.

3. The appliance of claim 2, wherein the refrigerant is R441a.

4. The appliance of claim 3, wherein the weight ratio composition of the hydrocarbons in the mixture is in the range of: from 2 to 4 of Ethane; from 40 to 70 of Propane; from 25 to 45 of Butane; from 4 to 8 of Isobutane, preferably 3.1 : 54.8 : 36.1 : 6.0 of Ethane : Propane : Butane : Isobutane, respectively.

5. The appliance of any one of the preceding claims, wherein a critical temperature of the refrigerant is in a range from about 105 °C to about 130 °C, preferably 117.3 °C.

6. The appliance of any one of the preceding claims, wherein a critical pressure of the refrigerant is in a range from about 39 bar 25 to about 49 bar, preferably 44.04 bar.

7. The appliance of any one of the preceding claims, wherein the nominal heat of vaporization of the refrigerant is in a range from about 430 kJ/kg to about 470 kJ/kg, preferably 451.5 kJ/kg.

8. The appliance of any one of the preceding claims, wherein the global warming potential index of the refrigerant in a range from 1 to 10, preferably less than 5.

9. The appliance of any one of the preceding claims, wherein the refrigerant has a nominal glide in a range from about 18 °C to about 22 °C, preferably about 20 °C at an absolute pressure of 1 bar.

10. The appliance of any one of the preceding claims, wherein the refrigerant has a glide of about 16 °C to 20 °C, preferably 18.2 °C at a pressure of 5 bar.

11. The appliance of any one of the preceding claims, wherein the refrigerant has a glide of about 14.4 °C at a pressure of 15 bar.

12. The appliance of any one of the preceding claims, wherein the first heat exchanger is adapted for cooling the medium.

13. The appliance of claim 12, wherein a nominal first heat exchanger inlet temperature of the medium is about 30° C at the least.

14. The appliance of any one of the preceding claims, wherein the second heat exchanger comprises a liquefier heat exchanger, and wherein a nominal liquefier heat exchanger outlet temperature of the medium is 100 °C at the most.

15. The appliance of any one of the preceding claims, comprising a closed-loop circuit wherein the medium circulates.
